Europäisches Patentamt

European Patent Office

Office européen des brevets

(11) Veröffentlichungsnummer: **0 536 679 A1**

## (12) EUROPÄISCHE PATENTANMELDUNG

(21) Anmeldenummer: **92117004.9**

(22) Anmeldetag: **06.10.92**

(51) Int. Cl.5: **C08L 3/04**, C08L 77/00

(30) Priorität: **08.10.91 DE 4133335**

(43) Veröffentlichungstag der Anmeldung:
**14.04.93 Patentblatt 93/15**

(84) Benannte Vertragsstaaten:
**CH DE FR GB IT LI NL**

(71) Anmelder: **EMS-INVENTA AG**
**Selnaustrasse 16**
**CH-8001 Zürich(CH)**

(72) Erfinder: **Buehler, Friedrich, Dr.rer.nat.,**
**Dipl.-Chem.**
**Caznerwiese am Bach 8K**
**W-7430 Thusis(DE)**
Erfinder: **Schmid, Eduard, Dr.sc.nat.**
**Valbeuna**
**W-7402 Bonaduz(DE)**
Erfinder: **Schultze, Hans Joachim, Dr.rer.nat.**
**Tittwiesenstrasse 11**
**W-7000 Chur(DE)**

(54) **Stärkemischung, Verfahren zu ihrer Herstellung sowie Verwendung derselben.**

(57) Die Erfindung betrifft eine hochtransparente, einphasige und biologisch abbaubare Stärkemischung aus 90 bis 1 Gew.-Teilen mindestens eines ausgewählten Polyamids und 10 bis 99 Gew.-Teilen einer Stärkeformmasse aus 96 bis 46 Gew.-Teilen mindestens einer chemisch modifizierten Stärke und 4 bis 40 Gew.-Teilen mindestens eines Weichmachers sowie vorzugsweise bis zu 4 Gew.-Teilen mindestens eines Additivs ausgewählt aus der Gruppe von Harnstoff, Harnstoffderivaten und Emulgatoren. Zusätzlich kann die Stärkemischung gegebenenfalls bis 20 Gew.-Teilen dem Stand der Technik entsprechende Zusatzstoffe enthalten. Die Erfindung betrifft ferner ein Verfahren zur Herstellung der hochtransparenten, einphasigen Stärkemischung und insbesondere die Verwendung dieser Stärkemischung zur Herstellung von thermoplastisch geformten Teilen, insbesondere Folien, durch Spritzgiessen, Extrusion, Koextrusion, Blasformen, Spritzprägen oder Umformen.

EP 0 536 679 A1

Die Erfindung betrifft den in den Patentansprüchen angegebenen Gegenstand. Insbesondere betrifft die Erfindung eine hochtransparente, einphasige und biologisch abbaubare Stärkemischung aus ausgewähltem biologisch abbaubaren Polyamid und einer Stärkeformmasse, die neben chemisch modifizierter Stärke und Weichmacher vorzugsweise noch mindestens ein Additiv, ausgewählt aus der Gruppe von Emulgatoren, Harnstoff und Harnstoffderivaten enthält. Die Erfindung betrifft ferner ein Verfahren zur Herstellung dieser hochtransparenten Stärkemischung. Weiterhin betrifft die Erfindung die Verwendung dieser Stärkemischung zur Herstellung von thermoplastisch geformten Teilen, insbesondere Folien, durch Spritzgiessen, Extrusion, Koextrusion, Blasformen, Spritzprägen und Umformen.

Da Stärke ein pflanzliches Kohlehydrat ist, gibt es Bestrebungen, sie als sogenannten "natürlichen Kunststoff" auf den verschiedensten Gebieten unter Einsatz der bekannten Kunststoffverarbeitungstechniken zur Anwendung zu bringen. Native Stärken müssen aber aufgrund ihrer körnigen Struktur erst aufgeschlossen bzw. destrukturiert werden, bevor sie thermoplastisch verarbeitbar sind.

Um einer solchen opaken Stärkegrundformmasse die von den Kunststoffen bekannten und gewünschten guten Eigenschaften zu verleihen, muss sie weiter veredelt werden. Oftmals verliert sie hierbei ihre biologische Abbaubarkeit.

Die EP 0 344 118 A2 betrifft ein Polymer-Blend-Material aus einer Schmelze von zumindest einem wasserhaltigen destrukturierten hydrophilen Polymeren und zumindest einem synthetischen, im wesentlichen wasserunlöslichen thermoplastischen Polymeren. Anhand von Beispielen für Blends auf der Basis von Gelatine sowie Cellulosederivaten und Polyethylen, Polystyrol, Polyvinylether, Polyoxymethylen und Ethylen-Acrylsäure-Copolymeren wird eine Verbesserung der Dimensionsstabilität durch den Zusatz des wasserunlöslichen Polymeren gezeigt. Der dort angegebene Hinweis auf eine mögliche biologische Abbaubarkeit, nämlich der Verlust an dieser zusätzlichen Stabilität nach mehreren Tagen, ist jedoch für die aus den Blends geformten Erzeugnisse eher als Nachteil zu werten, ohne tatsächlich etwas über die biologische Abbaubarkeit auszusagen.

Die EP-OS 0 327 505 A2 beschreibt ein schmelzegemischtes Polymer-Blend-Material aus destrukturierter, aber chemisch nicht modifizierter Stärke und mindestens einem wasserunlöslichen, synthetischen thermoplastischen Polymeren.

In gleicher Weise sind aus den Offenlegungsschriften EP 0 409 789 A2, EP 0 409 788 A2, EP 0 409 783 A2, EP 0 409 782 A2, EP 0 409 781 A1, EP 0 408 503 A2, EP 0 408 502 A2, EP 0 408 501 A2, EP 0 407 350 A2, EP 0 404 728 A2, EP 0 404 723 A2 und EP 0 404 727 A2, Polymer-Blend-Zusammensetzungen aus destrukturierter, ebenfalls chemisch nicht modifizierter Stärke und einem funktionalisierten Polymeren bekannt. Diese Zusammensetzungen können jeweils zusätzlich noch ein wasserunlösliches, thermoplastisches Polymeres enthalten. Hierbei wirkt dann das funktionalisierte Polymere als Verträglichkeitsvermittler zwischen der chemisch nicht modifizierten Stärke und dem zusätzlichen dritten thermoplastischen Polymeren.

Die deutsche Patentanmeldung DE 4 119 915.4 beschreibt Stärke-Polymer-Mischungen aus einer Stärkeformmasse und ausgewählten linearen Polymeren. Ihr spezieller Nachteil sowie der aller in den oben genannten Schriften beanspruchten Stärkematerialien ist ihr typischer Gelbstich sowie ihre Nichttransparenz. Opakes Material ist aber besonders für den Verpackungsbereich nur bedingt verwendbar, da hier die von den Kunststoffen gewohnte Transparenz gefordert wird.

Daher ist es Aufgabe der Erfindung, eine hochtransparente, biologisch abbaubare und einphasige Stärkemischung für die thermoplastische Verarbeitung zur Verfügung zu stellen, die keinen Gelbstich besitzt und keinen polymeren Verträglichkeitsvermittler enthält sowie ein Verfahren zur Herstellung dieser Mischung bereitzustellen. Weiterhin soll diese Stärkemischung als Granulat lagerstabil, d.h. unter normalen Lagerbedingungen feuchtigkeitsunempfindlich sein und sich zur Produktion von hochtransparenten, thermoplastisch geformten Teilen, insbesondere hochdehnfähigen und kaltwasserbeständigen Folien mit besonders glatter Oberfläche eignen. Eine besondere Anwendung soll diese Stärkemischung in der Herstellung von Koextrusionsfolien mit weiteren Polymeren ohne Haftvermittlerzusatz finden.

Diese Aufgabe wird durch die Stärkemischung mit den Merkmalen des Anspruchs 1, durch das Verfahren zur Herstellung dieser Stärkemischung mit den Merkmalen des Anspruchs 18 sowie durch die Verwendung der erfindungsgemässen Stärkemischung zur Herstellung von thermoplastisch geformten Teilen gemäss Anspruch 19, gelöst.

Ueberraschenderweise wurde festgestellt, dass aus einer Stärkeformmasse, die chemisch modifizierte Stärke enthält, und ausgewähltem, biologisch abbaubaren Polyamid eine hochtransparente, einphasige und biologisch abbaubare Stärkemischung ohne Zusatz eines polymeren Verträglichkeitsvermittlers für die thermoplastische Verarbeitung herstellbar ist.

Die erfindungsgemässe hochtransparente, einphasige und biologisch abbaubare Stärkemischung umfasst folgende Komponenten:

(a) 10 bis 99 Gew.-Teilen mindestens einer Stärkeformmasse aus

(i) 96 bis 46 Gew.-Teilen mindestens einer chemisch modifizierten Stärke

(ii) 4 bis 40 Gew.-Teilen mindestens eines Weichmachers

(iii) 0 bis zu 4 Gew.-Teilen mindestens eines Additivs

wobei sich die Gew.-Teile (i), (ii) und (iii) auf 100 Gew.-Teile ergänzen, sowie

(b) 90 bis 1 Gew.-Teilen mindestens eines ausgewählten Polyamids,

wobei sich die Gew.-Teile der Komponenten (a) und (b) auf 100 Gew.-Teile ergänzen und gegebenenfalls zusätzlich

(c) 0 bis 20 Gew.-Teilen dem Stand der Technik entsprechenden Zusatzstoffen.

Die erfindungsgemäss einzusetzende chemisch modifizierte Stärke besitzt einen natürlichen Wassergehalt von 5 bis 16 Gew.-%, bevorzugt 5 bis 12 Gew.-%, besonders bevorzugt 6 bis 8 Gew.-%. Daraus resultiert in der Regel ein Endwassergehalt der hochtransparenten Stärkemischung von 2 bis 8 Gew.-%, bevorzugt 2 bis 5 Gew.-%.

Die Herstellung der bevorzugt verwendeten Stärkeformmasse erfolgt über ein spezielles Verfahren, welches in der europäischen Patentanmeldung EP 92 088 18.3 beschrieben ist, wobei chemisch modifizierte Stärke mit natürlichem Wassergehalt, mindestens einen Weichmacher und Harnstoff und/oder Harnstoffderivate sowie mindestens ein Emulgator, wie z.B. Metallstearate, Glycerolmonostearat, Polyoxyethylen(20)-Sorbitanmonolaurat, Polyoxyethylen(20)-Sorbitanmonopalmitat, Polyoxyethylen(40)-Stearat, Polyoxyethylen-(100)-Stearat oder deren Mischungen, bei hinreichend erhöhten Temperaturen und Drucken in einem Extruder aufgeschlossen und als Schmelze extrudiert werden.

Dieses oben erwähnte Verfahren zur Herstellung einer homogenen, thermoplastisch verarbeitbaren Schmelze aus chemisch modifizierter Stärke umfasst folgende Verfahrensschritte:

a) Eindosieren einer chemisch modifizierten Stärke in den Einzugsbereich eines Extruders und deren Förderung,

b) Zudosieren einer ohne Fremdwasserzusatz vorhomogenisierten, flüssigen, Weichmacher-Emulgator-Additiv-Mischung, deren Vermischung mit der Stärke bei gleichzeitiger Förderung der Stärke-Weichmacher-Emulgator-Additiv-Mischung,

c) Aufschliessen der Stärkekörner ohne Beimischung von Fremdwasser und vollständige Plastifizierung der genannten Mischung zu einer homogenen, thermoplastisch verarbeitbaren Schmelze und deren Förderung,

d) Entgasen der Schmelze und deren weitere Förderung,

e) Auspressen der Schmelze durch eine Düse, wobei in den Schritten b) bis e) die genannte Mischung bzw. Schmelze hinreichend erhöhten Temperaturen, im Schritt d) einem verminderten Druck, und in Schritt e) einem erhöhten Druck ausgesetzt wird bzw. die folgenden Verfahrensschritte

a) Separates Eindosieren einer chemisch modifizierten Stärke und eines Weichmachers in den Einzugsbereich eines Extruders, deren Vermischung und Förderung

b) Zudosieren einer ohne Fremdwasserzusatz vorhomogenisierten, flüssigen Emulgator-Additiv-Mischung, deren Vermischung mit der Stärke-Weichmacher-Mischung bei gleichzeitiger Förderung der Stärke-Weichmacher-Emulgator-Additiv-Mischung

c) Aufschliessen der Stärkekörner ohne Beimischung von Fremdwasser und vollständige Plastifizierung der genannten Mischung zu einer homogenen, thermoplastisch verarbeitbaren Schmelze und deren Förderung,

d) Entgasen der Schmelze und deren weitere Förderung,

e) Auspressen der Schmelze durch eine Düse, wobei in den Schritten b) bis e) die genannte Mischung bzw. Schmelze hinreichend erhöhten Temperaturen, im Schritt d) einen verminderten Druck und in Schritt e) einem erhöhten Druck ausgesetzt wird.

Die chemisch modifizierte Stärke wurde durch Umsetzung ihrer OH-Gruppen mit Alkylenoxiden oder anderen Ether-, Ester-, Urethan-, Carbamat- und/oder Isocyanatbildenden Stoffen modifiziert. Bevorzugt sind Hydroxy-$C_2$ bis $C_6$-Alkyl-, Acetyl- oder Carbamatstärken oder deren Mischungen.

Der Substitutionsgrad der chemisch modifizierten Stärke beträgt 0,01 - 0,2 und der Amylosegehalt liegt bei 20 - 100 Gew.-%, besonders bevorzugt 50 bis 100 Gew.-%.

Der Weichmacher ist eine organische Verbindung mit mindestens einer Hydroxylgruppe, bevorzugt Polyol, besonders bevorzugt Sorbitol, Mannitol, D-Glykose, Glycerol, Ethylenglykol, Polyethylenglykol, Propylenglykol oder deren Mischungen. Er wird in Mengen von 4 bis 40 Gew.-Teilen, bevorzugt 9 bis 40 Gew.-Teilen, besonders bevorzugt 10 bis 30 Gew.-Teilen eingesetzt.

Komponente (a) (iii) kann in Mengen von 0 bis 4 Gew.-Teilen zugesetzt werden, wobei Harnstoff und/oder Harnstoffderivate und/oder Emulgatoren bevorzugt sind.

Ist das Additiv Harnstoff und/oder Harnstoffderivate so wird es in Mengen von 0,1 bis 2 Gew.-Teilen, bevorzugt 0,1 bis 1 Gew.-Teilen, besonders bevorzugt 1 Gew.-Teilen eingesetzt.

Ist das Additiv mindestens ein Emulgator, so wird es in Mengen von 0,1 bis 1 Gew.-Teilen, besonders bevorzugt 0,2 Gew.-Teilen eingesetzt, wobei dieser Emulgator einen Hydrophil-Lipophil-Balance-Wert von 0 bis 20, bevorzugt 10 bis 20, besitzen sollte. Als Emulgatoren eignen sich Metallstearate, Glycerolmonostearate, Polyoxyethylen(20)-Sorbitanmonolaurat, Polyoxyethylen(20)-Sorbitanmonopalmitat, Polyoxyethylen(40)-Stearat und/oder Polyoxyethylen(100)-Stearat.

In einer bevorzugten Ausführung besteht Komponente (a) aus 70 Gew.-Teilen Hydroxyethyl- und/oder Hydroxypropylstärke mit einem Substitutionsgrad von 0,06 und einem Amylosegehalt von 50 Gew.-%, 15 Gew.-Teilen Glycerol, 13,8 Gew.-Teilen Sorbitol, 1 Gew.-Teilen Harnstoff und 0,2 Gew.-Teilen Magnesiumstearat.

Als Komponente (b) eignen sich ausgewählte, bevorzugt aliphatische Polyamide mit einem Schmelz- oder Erweichungspunkt von 50 bis 160°C und einem Melt-Flow-Index (MFI) von 100 bis 5'000 Pa.s (bei 160°C und 21.2 N).

Bevorzugt sind Homopolyamide und/oder Copolyamide aus $\omega$-Aminocapronsäure, $\omega$-Aminooenantsäure, $\omega$-Aminocaprylsäure, $\omega$-Aminopelargonsäure, $\omega$-Aminocaprinsäure, $\omega$-Aminoundecylsäure, $\omega$-Aminolaurinsäure und/oder Caprolactam, Lactam-7, Lactam-8, Lactam-9, Lactam-10, Lactam-11, Laurinlactam und/oder aus Methylendiamin, Dimethylendiamin, Trimethylendiamin, Tetramethylendiamin, Pentamethylendiamin, Hexamethylendiamin und Oxalsäure, Malonsäure, Bernsteinsäure, Glutarsäure, Adipinsäure, Pimelinsäure, Korksäure, Azelainsäure, Sebacinsäure, Nonandicarbonsäure, Decandicarbonsäure, Undecandisäure, Dodecandisäure.

Besonders bevorzugt sind solche aus Caprolactam, Laurinlactam, $\omega$-Aminolaurinsäure, $\omega$-Aminocapronsäure, Hexamethylendiamin und Adipinsäure oder deren Mischungen.

Als dem Stand der Technik entsprechende Zusatzstoffe können optische Aufheller und/oder Stabilisatoren und/oder Antioxidantien und/oder Antiflammmittel und/oder Farbstoffe und/oder Füllstoffe und/oder Verarbeitungshilfsmittel zusätzlich als Komponente (c) in Mengen von 0 bis 20 Gew.-Teilen eingesetzt werden.

In einer bevorzugten Ausführungsform enthält die erfindungsgemässe einphasige Stärkemischung die Komponente (a) in Gew.-Teilen von 50 bis 95 und die Komponente (b) in Gew.-Teilen von 50 - 5, wobei 70 bis 95 Gew.-Teile der Komponente (a) und 30 bis 5 Gew.-Teile der Komponente (b) besonders bevorzugt sind.

Die Transparenz der erfindungsgemässen Stärkemischung ist im allgemeinen der Beweis für die Einphasigkeit.

Das Verfahren zur Herstellung der erfindungsgemässen hochtransparenten Stärkemischung umfasst das gemeinsame Aufschmelzen der Komponenten (a) und (b) im Verhältnis von 10/90 bis 99/1 in einem Extruder oder in einer Spritzgussmaschine bei Temperaturen, die nicht höher als 10°C unter dem Zersetzungspunkt der Stärke und nicht tiefer als 50°C über dem Schmelz- oder Erweichungspunkt des Polyamids liegen.

Die erfindungsgemässe Stärkemischung kann zu hochtransparenten, thermoplastisch geformten Teilen weiterverarbeitet werden, wobei bevorzugterweise zuerst ein Granulat hergestellt wird, das dann zur Produktion von Formteilen eingesetzt wird. Diese können durch Spritzgiessen, Blasformen, Extrusion, Koextrusion, Spritzprägen oder Umformen hergestellt werden. Besonders bevorzugt ist hierbei die Herstellung von Mono- oder Koextrusionsfolien, welche als Flachoder Blasfolien ausgebildet sein können.

Eine spezielle Ausführungsform solcher Folien besteht aus 50 bis 95 Gew.-Teilen der Stärkeformmasse (Komponente (a)) und 50 bis 5 Gew.-Teilen ausgewähltem Polyamid (Komponente (b)).

Komponente (c) kann entweder bei der Herstellung der Stärkemischung zudosiert werden, oder bevorzugterweise bereits den Komponenten (a) und/oder (b) zugefügt worden sein.

Vorteile der erfindungsgemässen Stärkemischung und aus ihr hergestellten Formteilen:

1. Hohe Transparenz
2. Sehr gute, d.h. glatte und stippenfreie Oberflächen
3. Einphasigkeit ohne Zusatz eines polymeren Verträglichkeitsvermittlers
4. Biologische Abbaubarkeit
5. Gute Reissfestigkeit bzw. Reissdehnung
6. Geringe Feuchtigkeitsaufnahme aus der Luft; dadurch Verarbeitbarkeit zu lagerstabilem Granulat
7. Einfache Verarbeitung ohne Blockneigung und Klebrigkeitsprobleme zu Folien und Koextrusionsfolien
8. Gute Haftung der Koextrusionsfolienschichten ohne Zusatz eines Haftvermittlers
9. Hochdehnfähige Folien
10. Verschweissung der Folien mit üblichen Heiss-Siegelgeräten möglich

4

11. Antistatisches Verhalten der Formteile

12. Formteile mit wasserlöslichen Farben bedruckbar

Bei der Herstellung von Koextrusionsfolien, die aus mindestens einer Schicht aus der erfindungsgemässen hochtransparenten Stärkemischung und mindestens aus einer Schicht aus mindestens einem weiteren Polymeren bestehen, sollten diese weiteren Polymeren einen Schmelz- oder Erweichungspunkt von 50 bis 160°C besitzen. Geeignet hierfür sind Polyamide, Polyester und/oder Polyolefine. Hierbei sind Polyolefine, ausgewählt aus der Gruppe von Polyethylen, Polypropylen, Polybutylen und deren Derivate bevorzugt. Besonders bevorzugt ist Polyethylen und/oder dessen Derivate.

In einer speziellen Ausführungsform bildet die hochtransparente Stärkemischung die Mittelschicht und das/die weitere(n) Polymere(n) die Innen- und Aussenschicht der Koextrusionsfolie. Bei mehr als drei Folienschichten kann die Stärkemischungsschicht auch mehrmals vorkommen. In weiteren Ausbildungsformen der Koextrusionsfolie kann die hochtransparente Stärkemischung auch die Innen- und/oder Aussenschicht bilden.

Alle Folien lassen sich in einer Dicke von 20 bis 500 $\mu$m, bevorzugt 50 bis 100 $\mu$m, herstellen.

Die Folien eignen sich z.B. zur Herstellung von Tragtüten, Beutel, Müllsäcken, Landwirtschaftsfolien, Windeldeckfolien sowie für biologisch abbaubare Folien und Filme jeder Art.

Ausserdem können alle Folien einem thermoplastischen Umformverfahren, wie z.B. Tiefziehen, unterworfen werden.

Die folgenden Beispiele erläutern die Erfindung, ohne sie darauf zu beschränken.

## I. Herstellung der Stärkeformmasse (Komponente (a))

Beispiel 1a)

Nach dem im folgenden beschriebenen Verfahren wurde aus 70 Gew.-Teilen Hydroxypropylmaisstärke mit einem Substitutionsgrad von 0,06 und einem Amylosegehalt von 50 Gew.-% sowie 15 Gew.-Teilen Glycerol, 12,8 Gew.-Teilen Sorbitol, 2 Gew.-Teilen Harnstoff und 0,2 Gew.-Teilen Magnesiumstearat eine Stärkeformmasse hergestellt, die anschliessend granuliert wurde.

Extrudereinstelldaten:

a) Heizzone:
   (1) Raumtemperatur
   (2) 130°C
   (3) 130°C
   (4) 100°C
   (5) 100°C (6) 150°C
b) Druck: Zone (6) (30-40 bar) 3 x 10$^6$ - 4 x 10$^6$ Pa
c) Drehmoment: 70 %
d) Unterdruck: (-0,4 bar) -4 x 10$^4$ Pa

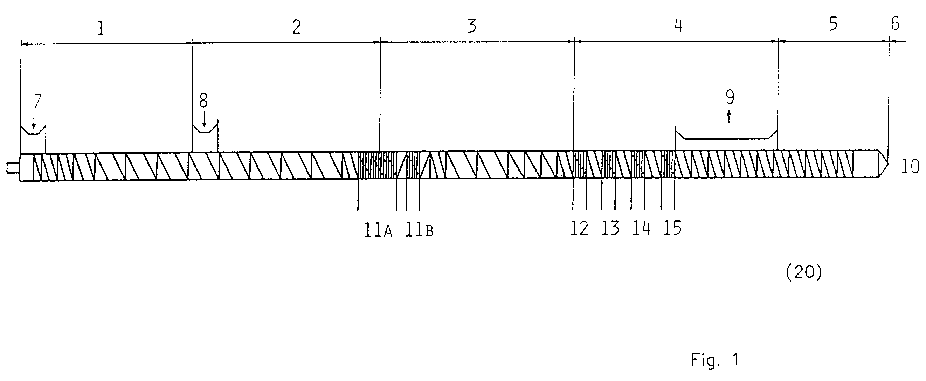

In den Einzugsbereich (Heizzone 1) eines gleichlaufenden, dichtkämmenden Doppelwellenextruders mit einer Schneckengeometrie gemäss Fig. 1 und einem Schneckenlängen-Durchmesserverhältnis von 41 wurden 70 Gew.-Teile Hydroxypropyl-Maisstärke mit einem Substitutionsgrad von 0,06 und einem Amylosegehalt von 50 Gew.-% und 12,8 Gew.-Teile Sorbitol an der Stelle 7 von Fig. 1 separat über zwei getrennte Dosiervorrichtungen eindosiert, im Extruder gleichzeitig vermischt und gefördert. 0,2 Gew.-Teile Magnesiumstearat und 2 Gew.-Teile Harnstoff wurden bei 60°C in 15 Gew.-Teile Glycerol gelöst. Diese vorhomogenisierte Weichmacher-Emulgator-Additiv-Mischung wurde an der Stelle 8 von Fig. 1 in den Extruder (Heizzone 2) eindosiert, dann im Extruder gleichzeitig vermischt und weitergefördert. Nach dem Aufschliessen der Stärkekörner und vollständigem Plastifizieren der Stärkemischung in der Knetkammer 11 (Heizzone 2 und 3) zu einer homogenen Schmelze, wurde die Stärkeschmelze durch Anlegen eines Unterdrucks an der Stelle 9 von Fig. 1 (Heizzone 4) entgast. Nach Durchlaufen der Heizzone (5) wurde die homogene, thermoplastisch verarbeitbare Stärkeschmelze in Heizzone (6) durch eine Düse als Strang mit geringer Strangaufweitung (Düse: 3 mm, Strang: 4 mm) extrudiert, abgekühlt und granuliert.

Beispiel 1b)

Wie Beispiel 1a), aber mit einem Harnstoffanteil von 1 Gew.-Teil sowie einem Sorbitolanteil von 13,8 Gew.-Teilen.

## II. Herstellung der biologisch abbaubaren, einphasigen, hochtransparenten Stärkemischung

Vergleichsbeispiele 2 bis 12 und erfindungsgemässe Beispiele 13 bis 24

Das Stärkegranulat von Beispiel 1a) oder 1b) wurde mit dem Granulat des ausgewählten Polyamids (Komponente (b)) vermischt und in die Dosierzone eines Doppelwellenextruders ZSK-30 (Fa. Werner & Pfleiderer) mit 6 Heizzonen eindosiert. Drehzahl und Durchsatz betrugen 100 UPM bzw. 8 bis 10 kg/h.

Die Materialeigenschaften der resultierenden Stärkemischungen sind Tabelle 2 zu entnehmen.

Die Schmelzviskositäten der Polyamide (Komponente (b)) wurden nach DIN 53 735 bei 160°C und 21,2 N ermittelt. Die Schmelzviskositäten der Stärkemischungen wurden mittels einer modifizierten Melt-Flow-Index-Methode bei 160°C und 236,4 N gemessen. Der Wassergehalt wurde nach Karl-Fischer gemäss DIN 53 714, der Schmelzpunkt differentialkalorimetrisch im trockenen Zustand mit einer Aufheizrate von 20°C/min in einem Du Pont Thermal Analyzer-Gerät Typ 1091B bestimmt. Die mechanischen Eigenschaften wurden im trockenen Zustand anhand von Spritzgussprüfstäben nach DIN 53 457 (Zug-E-Modul) und DIN 53 455 (Reissfestigkeit und Reissdehnung ) ermittelt.

Die Feuchtigkeitsresistenz wurde durch Messung der Quellung in kaltem Wasser bestimmt. Hierzu werden Folienstücke der Grösse 100 cm$^2$ eine Stunde in kaltem Wasser liegen gelassen und anschliessend ihre Wasseraufnahme durch Gewichtmessung bestimmt.

Die Auflösung der Stärkemischungen in heissem Wasser ist dagegen Voraussetzung für ihre biologische Abbaubarkeit.

In den Beispielen und Vergleichsbeispielen wurden folgende Markenprodukte verwendet:
- Grilon CF 62 BSE ist ein Copoylamid auf Basis der Monomeren Polyamid 6 und Polyamid 6.9 der Firma EMS-CHEMIE mit einem Schmelzpunkt von ca. 136°C
- Grilon CR 9 ist ein Copolyamid auf Basis der Monomeren von Polyamid 6 und Polyamid 12 der Firma EMS-CHEMIE mit einem Schmelzpunkt von ca. 200°C
- Grilon CA 6E ist ein Copolyamid auf Basis der Monomeren von Polyamid 6 und Polyamid 12 der Firma EMS-CHEMIE mit einem Schmelzpunkt von ca. 130°C
- Grilamid ELY 60 ist ein Copolyamid der Firma EMS-CHEMIE auf Basis von Lactam-12, Polyetherdiamin und dimerisierter Fettsäure mit einem Schmelzpunkt von ca. 160°C
- Griltex 1 ist ein Copolyamid der Fa. EMS-CHEMIE auf Basis der Monomeren von Polyamid 6, Polyamid 12 und Polyamid 6.6 mit einem Schmelzpunkt von ca. 110°C und einer Schmelzviskosität (DIN 53 735) von ca. 600 Pa.s (21.2 N / 160°C)
- Griltex 2 ist ein Copolyamid der Fa. EMS-CHEMIE auf Basis der Monomeren von Polyamid 6, Polyamid 12 und Polyamid 6.6 mit einem Schmelzpunkt von ca. 125°C und einer Schmelzviskosität (DIN 53 735) von ca. 400 Pa.s (21.2 N / 160°C)
- Griltex 3 ist ein Copolyamid der Fa. EMS-CHEMIE auf Basis der Monomeren von Polyamid 6, Polyamid 12 und Polyamid 6.6 mit einem Schmelzpunkt von ca. 110°C und einer Schmelzviskosität (DIN 53 735) von ca. 500 Pa.s (21.2 N / 160°C)
- Griltex 4 ist ein Copolyamid der Fa. EMS-CHEMIE auf Basis der Monomeren von Polyamid 6, Polyamid 12 und Polyamid 6.6 mit einem Schmelzpunkt von ca. 110°C und einer Schmelzviskosität (DIN 53 735) von ca. 100 Pa.s (21.2 N / 160°C)
- Griltex 5 ist ein Copolyamid der Fa. EMS-CHEMIE auf Basis der Monomeren von Polyamid 6, Polyamid 12, Polyamid 6.6, Polyamid 6.9 und Polyamid 11 mit einem Schmelzpunkt von ca. 80°C und einer Schmelzviskosität (DIN 53 735) von ca. 150 Pa.s (21.2 N / 160°C)

Tabelle 1: Herstellungsparameter für die erfindungsgemässen hochtransparenten Stärkemischungen und Vergleichsbeispiele

| Bei-spiel | Polyamid | | | | Stärke Typ Beispiel | $T_1$ (°C) | $T_2$ (°C) | $T_3$ (°C) | $T_4$ (°C) | $T_5$ (°C) | $T_6$ (°C) | $T^3_{sch}$ (°C) |
|---|---|---|---|---|---|---|---|---|---|---|---|---|
| | Typ | Schmp.[1] (°C) | Schmelzvis-kosität[2] (Pa.s) | Anteil (Gew.-Teile) | | | | | | | | |
| 2a + 2* | Grilon CF 62 BSE | 136 | 3100 | 50 | 1a | 0 | 140 | 145 | 145 | 145 | 150 | 167 |
| 3* | Grilon CF 62 BSE | 136 | 3100 | 40 | 1a | 0 | 140 | 145 | 145 | 145 | 150 | 163 |
| 4* | Grilon CF 62 BSE | 136 | 3100 | 30 | 1a | 0 | 140 | 145 | 145 | 145 | 150 | 161 |
| 5* | Grilon CF 62 BSE | 136 | 3100 | 20 | 1a | 0 | 140 | 145 | 145 | 145 | 150 | 157 |
| 6* | Grilon CF 62 BSE | 136 | 3100 | 10 | 1a | 0 | 140 | 145 | 145 | 145 | 150 | 165 |
| 7* | Grilon CR 9 | 200 | -- | 50 | 1a | 0 | 210 | 230 | 230 | 230 | 240 | 235 |
| 8* | Grilon CA 6E | 130 | 3600 | 50 | 1a | 0 | 140 | 140 | 140 | 140 | 150 | 165 |
| 9* | Grilamid ELY 60 | 160 | -- | 50 | 1a | 0 | 150 | 170 | 150 | 150 | 170 | 179 |
| 10* | Grilamid ELY 60 | 160 | -- | 30 | 1a | 0 | 150 | 170 | 150 | 150 | 170 | 180 |
| 11* | Grilamid ELY 60 | 160 | -- | 10 | 1a | 0 | 150 | 170 | 150 | 150 | 170 | 178 |
| 12* | Grilamid ELY 60 | 160 | -- | 5 | 1a | 0 | 150 | 170 | 150 | 150 | 170 | 179 |
| 13 | Griltex 1 | 110 | 600 | 50 | 1a | 0 | 150 | 150 | 130 | 130 | 150 | 151 |
| 14 | Griltex 1 | 110 | 600 | 40 | 1b | 0 | 150 | 150 | 130 | 130 | 150 | 145 |
| 15 | Griltex 1 | 110 | 600 | 30 | 1b | 0 | 150 | 150 | 130 | 130 | 150 | 147 |
| 16 | Griltex 1 | 110 | 600 | 20 | 1b | 0 | 150 | 150 | 130 | 130 | 150 | 149 |
| 17 | Griltex 1 | 110 | 600 | 50 | 1b | 0 | 150 | 150 | 130 | 130 | 150 | 147 |
| 18 | Griltex 1 | 110 | 600 | 10 | 1b | 0 | 150 | 150 | 130 | 130 | 150 | 153 |
| 19 | Griltex 1 | 110 | 600 | 5 | 1b | 0 | 150 | 150 | 130 | 130 | 150 | 153 |
| 20 | Griltex 2 | 125 | 400 | 50 | 1b | 0 | 150 | 150 | 130 | 130 | 150 | 150 |
| 21 | Griltex 2 | 125 | 400 | 20 | 1b | 0 | 150 | 150 | 130 | 130 | 150 | 153 |
| 22 | Griltex 3 | 110 | 500 | 50 | 1b | 0 | 150 | 150 | 130 | 130 | 150 | 143 |
| 23 | Griltex 4 | 110 | 100 | 50 | 1b | 0 | 150 | 150 | 130 | 130 | 150 | 143 |
| 24 | Griltex 5 | 80 | 150 | 50 | 1b | 0 | 120 | 100 | 100 | 100 | 130 | 125 |

* Vergleichsbeispiele
1 Schmelzpunkt gemäss DSC
2 Schmelzviskosität bei 160 °C und 21,2 N nach DIN 53 735
3 $T_{sch}$ = Temperatur der Schmelze

Tabelle 2: Materialeigenschaften erfindungsgemässer, hochtransparenter Stärkemischung und Vergleichsbeispiele

| Beispiel | Wasser[1] (Gew.-%) | Schmp.[2] (°C) | Schmelz-[3] viskosität (Pa.s) | E-Modul[4] (N/mm$^2$) | Reiss-[5] festigkeit (N/mm$^2$) | Reiss-[6] dehnung (%) | Kaltwasser Quellung (%) | Heisswasser auflösung | Transparenz | Farbe |
|---|---|---|---|---|---|---|---|---|---|---|
| 2a* | 11.60 | -.- | 259 | 78 | 10.5 | 434 | max. 10 | ja | nein | + |
| 2* | 4.40 | 107 | 1867 | 254 | 21.1 | 404 | max. 10 | ja | nein | + |
| 3* | 2.20 | 111 | 4508 | 499 | 17.5 | 221 | max. 10 | ja | nein | + |
| 4* | 1.80 | 115 | 6500 | 1038 | 26.6 | 4 | max. 10 | ja | nein | + |
| 5* | 1.60 | 113 | 8000 | 1393 | 30.4 | 3 | Auflösung | ja | nein | o |
| 6* | -.- | -.- | -.- | -.- | -.- | -.- | -.- | ja | nein | + |
| 7* | -.- | -.- | -.- | -.- | -.- | -.- | -.- | ja | nein | + |
| 8* | -.- | -.- | -.- | -.- | -.- | -.- | -.- | - | - | - |
| 13 | 5.50 | 143 | 215 | 117 | 14.6 | 434 | max. 10 | ja | gut | + |
| 14 | 7.65 | 145 | 255 | 71 | 13.0 | 520 | Auflösung | ja | sehr gut | ++ |
| 15 | 7.57 | 147 | 275 | 110 | 9.6 | 355 | Auflösung | ja | gut | ++ |
| 16 | 8.11 | 149 | 271 | 89 | 6.4 | 220 | 10 - 20 | ja | sehr gut | o |
| 17 | 5.59 | 147 | 263 | - | - | - | max. 10 | ja | sehr gut | ++ |
| 18 | 4.60 | 165 | 2840 | 190 | 9.3 | 64 | max. 10 | ja | gut | ++ |
| 19 | 4.60 | 163 | 3575 | 160 | 8.2 | 66 | max. 10 | ja | sehr gut | ++ |
| 20 | 4.43 | 146 | 265 | 75 | 14.0 | 510 | Auflösung | ja | sehr gut | ++ |
| 21 | 7.60 | 148 | 283 | 92 | 7.5 | 210 | max. 10 | ja | gut | ++ |
| 22 | 8.05 | - | - | - | - | - | max. 10 | ja | nein | ++ |
| 23 | - | - | - | - | - | - | max. 10 | ja | nein | ++ |
| 24 | - | - | - | - | - | - | max. 10 | ja | nein | ++ |

* = Vergleichsbeispiele

1 Endwassergehalt nach DIN 53 714
2 Schmelzpunkt gemäss DSC
3 Schmelzviskosität bei 160°C und 236,4 N
4 Zug-E-Modul nach DIN 53 457
5,6 nach DIN 53 455

## Patentansprüche

1. Stärkemischung, dadurch gekennzeichnet, dass sie hochtransparent, einphasig und biologisch abbaubar ist und folgende Komponenten umfasst:

(a) 10 bis 99 Gew.-Teilen einer Stärkeformmasse aus

    (i) 96 bis 46 Gew.-Teilen mindestens einer chemisch modifizierten Stärke

    (ii) 4 bis 40 Gew.-Teilen mindestens eines Weichmachers

    (iii) 0 bis 4 Gew.-Teilen mindestens eines Additivs

wobei sich die Gew.-Teile von (i), (ii) und (iii) auf 100 Gew.-Teile ergänzen, sowie

    (b) 90 bis 1 Gew.-Teilen mindestens eines ausgewählten Polyamids,

    wobei sich die Gew.-Teile der Komponenten (a) und (b) auf 100 Gew.-Teile ergänzen und gegebenenfalls zusätzlich

    (c) 0 bis 20 Gew.-Teile dem Stand der Technik entsprechende Zusatzstoffe.

2. Stärkemischung gemäss Anspruch 1, dadurch gekennzeichnet, dass Komponente (a) (iii) ausgewählt ist aus der Gruppe, die Harnstoff, Harnstoffderivate und Emulgatoren umfasst.

3. Stärkemischung gemäss den Ansprüchen 1 und 2, dadurch gekennzeichnet, dass Komponente (a) (iii) 0,1 bis 2 Gew.-Teile Harnstoff und/oder Harnstoffderivate und/oder 0,1 bis 2 Gew.-Teile mindestens eines Emulgators ist.

4. Stärkemischung gemäss den Ansprüchen 1 bis 3, dadurch gekennzeichnet, dass sie aus 50 bis 95 Gew.-Teilen, bevorzugt 70 bis 95 Gew.-Teilen, der Komponente (a) und 50 bis 5 Gew.-Teilen, bevorzugt 30 bis 5 Gew.-Teilen, der Komponente (b) besteht.

5. Stärkemischung gemäss den Ansprüchen 1 bis 4, dadurch gekennzeichnet, dass die chemisch modifizierte Stärke einen natürlichen Wassergehalt von 5 bis 16 Gew.-%, bevorzugt 5 bis 12 Gew.-%, besonders bevorzugt 6 bis 8 Gew.-%, besitzt.

6. Stärkemischung gemäss den Ansprüchen 1 bis 5, dadurch gekennzeichnet, dass die chemisch modifizierte Stärke einen Amylosegehalt von 20 bis 100 Gew.-%, bevorzugt 50 bis 100 Gew.-%, besonders bevorzugt 65 bis 100 Gew.-%, besitzt.

7. Stärkemischung gemäss den Ansprüchen 1 bis 6, dadurch gekennzeichnet, dass die chemisch modifizierte Stärke durch Umsetzung ihrer OH-Gruppen mit Alkylenoxiden oder anderen Ether-, Ester-, Urethan-, Carbamat- und/oder Isocyanat-bildenden Stoffen modifiziert ist.

8. Stärkemischung gemäss den Ansprüchen 1 bis 7, dadurch gekennzeichnet, dass die chemisch modifizierte Stärke eine Hydroxy-$C_2$-bis $C_6$- Alkyl-, Acetyl- oder Carbamatstärke oder deren Mischungen ist.

9. Stärkemischung gemäss den Ansprüchen 1 bis 8, dadurch gekennzeichnet, dass die chemisch modifizierte Stärke einen Substitutionsgrad von 0,01 bis 0,2 besitzt.

10. Stärkemischung gemäss den Ansprüchen 1 bis 9, dadurch gekennzeichnet, dass Komponente (a) den Weichmacher in Mengen von 9 bis 40 Gew.-Teilen, bevorzugt 10 bis 30 Gew.-Teilen, enthält.

11. Stärkemischung gemäss den Ansprüchen 1 bis 10, dadurch gekennzeichnet, dass der Weichmacher eine organische Verbindung mit mindestens einer Hydroxylgruppe, bevorzugt Polyol, besonders bevorzugt Sorbitol, Mannitol, D-Glykose, Glycerol, Ethylenglykol, Polyethylenglykol, Propylenglykol oder deren Mischungen ist.

12. Stärkemischung gemäss den Ansprüchen 1 bis 11, dadurch gekennzeichnet, dass Komponente (a) den Emulgator in Mengen von 0,1 bis 1 Gew.-Teilen, bevorzugt 0,2 Gew.-Teilen enthält.

13. Stärkemischung gemäss den Ansprüchen 1 bis 12, dadurch gekennzeichnet, dass der Emulgator eine Verbindung mit einem Hydrophil-Lipophil-Balance-Wert von 0 bis 20, bevorzugt 10 bis 20, besonders bevorzugt Metallstearat, Glycerolmonostearat, Polyoxyethylen(20)-Sorbitanmonolaurat, Polyoxyethylen-(20)-Sorbitanmonopalmitat, Polyoxyethylen(40)-Stearat, Polyoxyethylen (100)-Stearat oder deren Mischungen ist.

**14.** Stärkemischung gemäss den Ansprüchen 1 bis 13, dadurch gekennzeichnet, dass Komponente (a) Harnstoff und/oder Harnstoffderivate in Mengen von 0,1 bis 1 Gew.-Teilen enthält.

**15.** Stärkemischung gemäss einem der Ansprüche 1 bis 14, dadurch gekennzeichnet, dass Komponente (b) ein aliphatisches Polyamid mit einem Schmelzpunkt von 50 bis 160°C und einem Melt-Flow-Index (MFI) von 100 bis 5000 Pa.s (bei 160°C und 21.2 N) ist.

**16.** Stärkemischung gemäss Anspruch 15, dadurch gekennzeichnet, dass das Polyamid ein Homopolyamid oder Copolyamid aus Aminocarbonsäuren und/oder Lactamen mit 6 bis 12 C-Atomen und/oder aus aliphatischen Diaminen mit 1 bis 6 C-Atomen und linearen Dicarbonsäuren mit 2 bis 12 C-Atomen, bevorzugt Caprolactam, Laurinlactam, $\omega$-Aminolaurinsäure, $\omega$-Aminocapronsäure, Hexamethylendiamin und Adipinsäure, oder deren Mischungen ist.

**17.** Stärkemischungen gemäss den Ansprüchen 1 bis 16; dadurch gekennzeichnet, dass die dem Stand der Technik entsprechenden Zusatzstoffe ausgewählt sind aus der Gruppe, die optische Aufheller, Stabilisatoren, Antioxidantien, Farbstoffe, Füllstoffe, Amtiflammmittel und Verarbeitungshilfen, umfasst.

**18.** Verfahren zur Herstellung einer Stärkemischung gemäss einem der Ansprüche 1 bis 17, dadurch gekennzeichnet, dass die Komponenten (a) und (b) im Verhältnis 10:90 bis 99:1 vorgemischt und bei Temperaturen, die nicht höher als 10°C unter dem Zersetzungspunkt der Stärke und nicht tiefer als 50°C über dem Schmelzpunkt des ausgewählten Polyamids liegen, in der Schmelze homogen gemischt und extrudiert oder koextrudiert werden.

**19.** Verwendung einer Stärkemischung gemäss einem der Ansprüche 1 bis 17 zur Herstellung von thermoplastisch geformten Teilen durch Spritzgiessen, Extrusion, Koextrusion, Blasformen, Umformen oder Spritzprägen.

**20.** Verwendung einer Stärkemischung zur Herstellung von thermoplastisch geformten Teilen gemäss Anspruch 19 in Form von Mono- oder Koextrusionsfolien mit einer Dicke von 20 bis 500 $\mu$m.

**21.** Verwendung einer Stärkemischung zur Herstellung von Monofolien gemäss Anspruch 20, die aus 50 bis 95 Gew.-Teilen der Komponente (a) und 50 bis 5 Gew.-Teilen der Komponente (b) bestehen.

**22.** Verwendung einer Stärkemischung zur Herstellung von Koextrusionsfolien gemäss Anspruch 20, die aus mindestens einer Schicht aus der Stärkemischung und mindestens einer Schicht aus einem weiteren ausgewählten Polymeren mit einem Schmelz- oder Erweichungspunkt von 50 bis 160°C bestehen.

**23.** Verwendung einer Stärkemischung zur Herstellung von Koextrusionsfolien gemäss Anspruch 22, wobei das weitere Polymere ein Polyamid und/oder Polyester und/oder Polyolefin ist.

**24.** Verwendung einer Stärkemischung zur Herstellung von Koextrusionsfolien gemäss Anspruch 23, wobei das Polyolefin ein Polyethylen und/oder Polypropylen und/oder Polybutylen und/oder deren Derivate, bevorzugt Polyethylen und/oder dessen Derivate, ist.

**25.** Verwendung einer Stärkemischung zur Herstellung von Koextrusionsfolien gemäss den Ansprüchen 22 bis 24, wobei die Stärkemischung die Mittelschicht und das/die weitere(n) Polymer(en) die Innen- bzw. Aussenschicht bilden.

**26.** Verwendung einer Stärkemischung zur Herstellung von Koextrusionsfolien gemäss den Ansprüchen 22 bis 24, wobei die Stärkemischung die Innen- und/oder die Aussenschicht bildet.

Fig. 1

(20)

**Europäisches Patentamt**

# EUROPÄISCHER RECHERCHENBERICHT

Nummer der Anmeldung

EP    92 11 7004

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,P | DATABASE WPIL<br>Week 3692,<br>Derwent Publications Ltd., London, GB;<br>AN 92-295716<br>& JP-A-4 202 566 (NICHIDEN KAGAKU KAB. K)<br>23. Juli 1992<br>* Zusammenfassung *<br>--- | 1,2,8,<br>15-17 | C08L3/04<br>C08L77/00 |
| A,D | EP-A-0 327 505 (WARNER-LAMBERT CO.)<br><br>* Seite 2, Zeile 58 - Seite 3, Zeile 20 *<br>* Seite 3, Zeile 57 - Seite 4, Zeile 17 *<br>* Ansprüche 1-3,5-16,20,22-24 *<br>--- | 1,4-6,<br>10,11,<br>17,19-21 | |
| A | PATENT ABSTRACTS OF JAPAN<br>vol. 013, no. 145 (C-583)10. April 1989<br>& JP-A-63 304 061 ( MITSUBISHI PETROCHEM.<br>CO. LTD. ) 12. Dezember 1988<br>* Zusammenfassung *<br>* siehe auch DERWENT abstract AN 89-029221<br>bzgl. Komponente (b) *<br>--- | 1 | |
| A | WO-A-9 014 938 (GOODMAN FIELDER WATTIE<br>AUSTRALIA LTD.)<br>--- | | RECHERCHIERTE SACHGEBIETE (Int. Cl.5)<br><br>C08L<br>C08K<br>C08B |
| A | DE-A-1 955 711 (KRAFTCO. CORP)<br><br>----- | | |

Der vorliegende Recherchenbericht wurde für alle Patentansprüche erstellt

| Recherchenort | Abschlußdatum der Recherche | Prüfer |
|---|---|---|
| DEN HAAG | 21 JANUAR 1993 | BETTELS B.R. |